# EUROPEAN PATENT APPLICATION

(11) **EP 1 887 495 A2**
(43) Date of publication of application: **13.02.2008**
(21) Application number: 07007811.8
(22) Date of filing: 17.04.2007
(51) Int. Cl.: G06K 19/077

(54) **RFID tag and method for reading the same**

(30) Priority: 08.08.2006 JP 2006216091
(71) Applicant: Hitachi, Ltd., Chiyoda-ku Tokyo 100-8280 (JP)
(72) Inventor: Sakama, Isao, c/o Hitachi, Ltd., Chiyoda-ku Tokyo 100-8220 (JP)
(74) Representative: Strehl Schübel-Hopf & Partner

(57) **Abstract**

A RFID tag (1) for accommodation in a narrow clearance in an electronic device (10) and providing a predetermined communication distance even if a displacement occurs between first and second antennas (3, 5). First antenna (3) is mounted through first spacer (2) to metal case (11) surface and second antenna (5) mounted to resin container (12) surface facing the first antenna (3). The dielectric resin container (12) functions as a second spacer. Only the first spacer (2) and first antenna (3) are accommodated in the narrow clearance between metal case (11) and resin container (12), the tag can be mounted even in an electronic device with a small redundant space and small size. First antenna (3) is shorter than second antenna (5) so that a required communication distance may be obtained even if their relative position is changed.

## Description

### BACKGROUND OF THE INVENTION

The present invention relates to an RFID (Radio Frequency Identification) tag to transmit information, such as identification information (ID) recorded in an IC chip, on radio frequencies (RF), and particularly to an RFID tag suitable for mounting in a metal-made device and a method for reading the RFID tag.

The RFID tag includes an IC chip, which stores identification information and so on, and a miniaturized antenna connected to the IC chip, and this IC chip has a function to send and receive radio frequency (RF) signals via the miniaturized antenna. Therefore, the information recorded in the IC chip can be read in non-contact mode when the user places a tag reader (the antenna thereof) over the RFID tag.

To show an example of use, the RFID tag may be mounted on or incorporated in an electronic device, such as a cell phone or a digital video camera. Most of those electronic devices have a structure formed by packaging a device unit containing an internal main electronic circuit and a battery in a synthetic resin container. Furthermore, the device unit and the battery then are encased in a metal case or the like for electromagnetic shielding and for encapsulation of the contents.

In a part of or in one aspect of the RFID tag, there is provided an inlet, which is obtained by forming an antenna made of copper film on a plate-like base material of a polyimide resin, for example, and attaching this antenna to an IC chip, such as a µ-chip (trademark). When this inlet is attached to the metal surface of the metal case mentioned above, for example, and is used as a RFID tag, the antenna of the inlet is subject to the effects of the metal surface and the communication distance is shortened extremely. For this reason, since it is necessary to use a type of external antenna which is appropriate for a metal object, there has been difficulty in using an RFID tag on metal products.

Conventionally, there has been proposed an IC tag for wireless use, which includes an inlet, a first spacer mounted to the underside (on the side facing the metal member) of the inlet, a second spacer mounted to the top surface (on the side opposite from the side facing the metal member) of the inlet, and a second antenna mounted on the second spacer (refer to US2005/0138798 paragraph [0021] to [0026], Figs. 1 and 2, for example). In this IC tag for wireless use, it is said that the communication distance is longest when the length of the second antenna is 1/2 of the wavelength of a radio wave used. Further, the antenna length of the inlet is 1/2 the wavelength of a radio wave used. In this case, it can be said that the length of the first antenna constituting the inlet is equal to the length of the second antenna mounted on the second spacer on the inlet.

### SUMMARY OF THE INVENTION

However, in the conventional IC tag for wireless use (revealed in JP-A-2005-210676), it was necessary that the two antennas were mounted precisely facing each other to obtain a desired communication distance. If the two antennas do not face each other correctly and are displaced in the longitudinal axis direction, the resonance frequency will change greatly or gain at a predetermined communication frequency will decrease, resulting in a shortened communication distance. Therefore, manufactured individual IC tags for wireless use have variations in performance, which has been a difficult problem. There is another problem that to lengthen the communication distance, it is necessary to provide a long separation distance between the first antenna and the second antenna, and accordingly some implementation space (mounting space) has to be provided.

In an electronic device structured as described, if a conventional multilayered RFID tag is mounted to the surface of a resin container, there is a possibility that the RFID tag comes off by mistake when the user is handling it or the RFID tag is removed intentionally. For this reason, it is required that the RFID tag should be mounted on the surface of a metal case and placed in a plastic or resin container. However, the RFID tag is a laminated structure of at least three layers; a first antenna, a second antenna, and a second spacer of a resin. When this RFID tag is to be mounted on the surface of a metal case, a first spacer of a resin needs to be inserted between the RFID tag and the metal case. However, since the clearance between the metal case and the plastic or resin container is generally about 2mm or less, it has been fairly difficult to place the laminated RFID tag through the intermediary of the first spacer in a narrow clearance between the surface of the metal case and the resin container.

The present invention has been made to address the above problems and has its object to provide an RFID tag capable of being accommodated in a narrow clearance between a metal case and a resin container or casing in electronic devices and securing a predetermined communication distance even if there is some displacement occurs between the first antenna and the second antenna, and also provide a method for reading the RFID tag.

To achieve the above object, the RFID tag according to the present invention can be mounted on an electric conductor and used, and the RFID tag is characterized in that the first antenna has an electric conductor and an IC chip mounted on the electric conductor, that the second antenna is so arranged as to be electromagnetically coupled to the first antenna and the second antenna resonates at a predetermined communication frequency, and that the first antenna is shorter than the second antenna. The concrete technical concept of this invention will be described by referring to some embodiments of the present invention.

According to an aspect of an RFID tag and a method for reading the RFID tag of the present invention, compared to the second antenna that resonates at a communication frequency, the length of the first antenna which has an 1C chip and which is magnetically coupled to the second antenna is made shorter, so that even if some displacement occurs in the relative position of the first and second antennas, changes are less likely to occur in the characteristics, such as resonance frequency and gain, thus reducing variations in quality of RFID tag products.

According to another aspect of the RFID tag and the method for reading the RFID tag of the present invention, in addition to the above-mentioned effects, because the resin container is used as the second spacer, the implementation clearance can be made smaller, which contributes to down-sizing of an electronic device to which the present invention is applied.

According to a yet additional aspect of the RFID tag and the method for reading the RFID tag of the present invention, an RFID tag is formed by inserting or accommodating only the first antenna and a nonconductive spacer (first spacer) in a narrow clearance between the metal case and the resin container and by mounting a second antenna through the intermediary of the resin container serving as a dielectric material. With the arrangement, even if the electronic device is made thinner, the RFID tag can be mounted in it, and protrusions extending from the surface of the resin container can be reduced to a minimum. Since the length of the first antenna is shorter than the second antenna, even if the accuracy of the relative position of the first antenna and the second antenna is reduced, a desired communication distance can be obtained. In addition, if one detaches the second antenna from the resin container, information in the RFID tag can be prevented from being read by somebody unnecessarily.

Other objects, features and advantages of the invention will become apparent from the following description of the embodiments of the invention taken in conjunction with the accompanying drawings.

### BRIEF DESCRIPTION OF THE DRAWINGS

Figs. 1A and 1B are block diagrams, the former being in a perspective view, of the basic structure of an RFID tag according to a first embodiment of the present invention.
Fig. 2 is a block diagram of a modification of the first embodiment, in which the component elements of the first antenna are separated from the component elements of the second antenna.
Figs. 3A and 3B are perspective views, seen from above, of an electronic device, to which an RFID tag of the present invention is applied, and Fig. 3A shows the state when an RFID tag is not mounted and Fig. 3B shows the state when an RFID tag is mounted.
Fig. 4 is a perspective view in external appearance of an electronic device incorporating an RFID tag realized according to the first embodiment of the present invention.
Figs. 5A to 5C are process charts showing steps by which an IC chip is mounted to a power feeding part of the first antenna, in which Fig. 5A shows a power feeding part by the first antenna and the IC chip, Fig. 5B is an enlarged view of the power feeding part when an IC chip is mounted on the first antenna, and Fig. 5C is a sectional view of the joining region of the first antenna and the IC chip.
Fig. 6 is a conceptual diagram of the first antenna, in which an IC chip is mounted to the power feeding part of the T-slit.
Fig. 7 is a characteristic graph showing a relation between operating frequency and communication distance in the RFID tag of a basic structure as shown in Figs. 1A and 1B.
Fig. 8 is a characteristic graph showing the changes when the center frequency is changed if the first antenna and the second antenna are of the same length in the RFID tag of the basic structure as shown in Figs 1A and 1B.
Fig. 9 is a characteristic diagram showing variation in the operation center frequency relative to the length of the first antenna when the amount of displacement between the first antenna and the second antenna is ±5mm.
Fig. 10 is a characteristic diagram showing a relation between the length of the first antenna and a maximum communication distance when the working frequency is 2.45 GHz.
Fig. 11 is a plan view of an electronic device including an RFID tag according to a second embodiment of the present invention.
Fig. 12 is a plan view of an electronic device including an RFID tag according to a third embodiment of the present invention.

### DESCRIPTION OF THE EMBODIMENTS

Referring now to the accompanying drawings, preferred embodiments for carrying out the present invention (here after referred to simply as embodiments) will be described in detail.

### <First Embodiment>

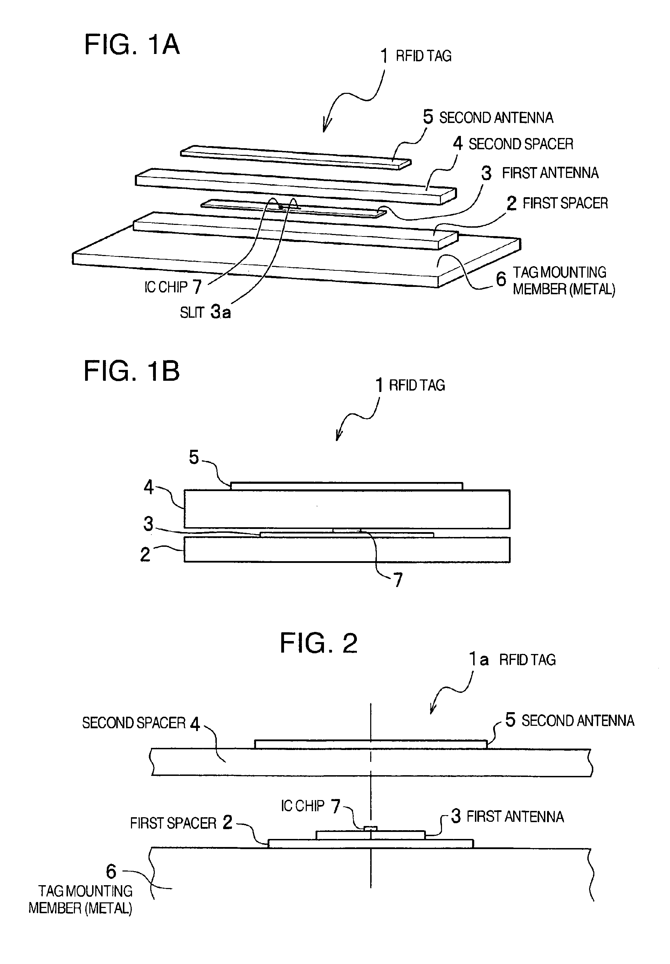

Figs. 1A and 1B are block diagrams showing an RFID tag 1 according to a first embodiment of the present invention, in which Fig. 1A shows the state when the component elements are taken apart, and Fig. 1B shows the state when the component elements are stacked.

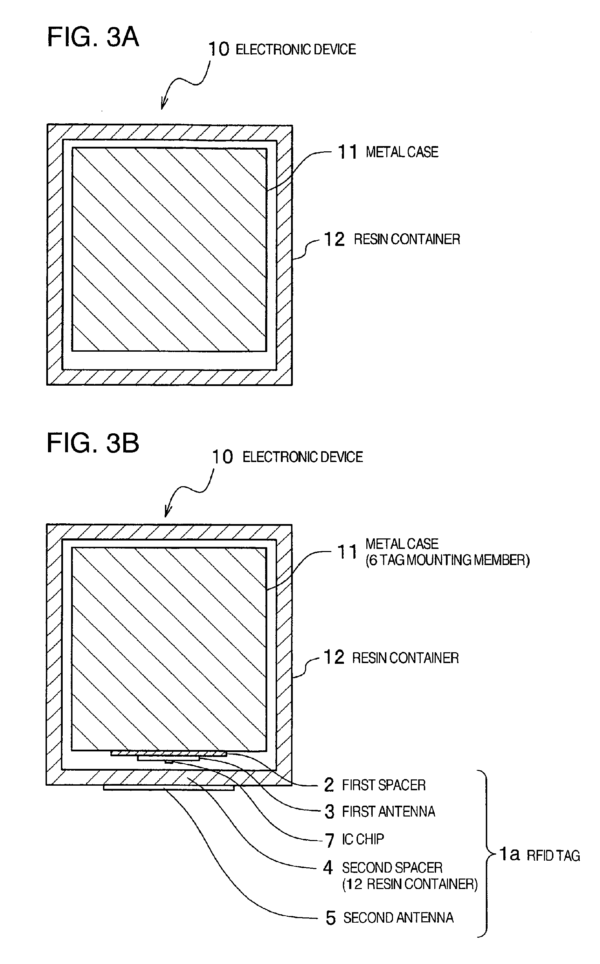

As will be described later with reference to Figs. 3A and 3B, in an electronic device 10 structured to house a metal case 11 with an electronic circuitry accommodated therein in a resin container 12, a RFID tag 1a is formed in a thin structure suitable for its mounting by using a narrow clearance between the outer surface of the metal case 11 and the inner surface of the resin container 12. The resin container 12 is made of a synthetic resin in this case, but may be made of any other nonconductive material, such as a hard rubber or dried wood. The metal case 11 is formed of a metal such as aluminum or copper and used to perform electromagnetic shielding inside and outside of the metal case. The RFID tag 1a in this embodiment may be applied not only to the metal case 11 but also to objects having a surface or the vicinity thereof serving as a good electric conductor.

In this embodiment, to realize an RFID tag 1a of such a thin structure, the first antenna 3 and the second antenna 5 are separated from each other, and the resin container 12 that houses or packages the metal case 11 of the electronic device 10 is utilized as the second spacer 4. That is, the first antenna 3 is attached through the intermediary of the first spacer 2 to the surface of the metal case 11 and furthermore the second antenna 5 is attached to the outer surface of the resin container 12 at a position facing the first antenna 3. In other words, the RFID tag 1a is constituted by forming built-in components (or to be accommodated elements) including the first spacer 2 and the first antenna 3 in a thinned form, accommodating the built-in components in a narrow clearance between the surface of the metal case 11 and the inner surface of the resin container 12, and attaching the second antenna 5 to another surface of the resin container 12 serving as the second spacer 4.

As described, the first antenna 3 on which the IC chip is attached and the second antenna 5 are formed in a separable way. In addition, the length of the first antenna 3 is shorter than that of the second antenna 5. Therefore, the electronic device 10 is formed by a metal case 11 for accommodating electronic circuits and a resin container 12 for packaging or housing the metal case 11, and the first antenna 5 is mounted to the surface of the metal case 11 through the intermediary of the first spacer 2 of non-conductive material, and the second antenna 5 is mounted to the outer surface of the resin container 12, thereby realizing the RFID tag 1a. Note that the second antenna 5 may be formed to be mounted in a detachable manner to the surface of the resin container 12.

As shown in Figs. 1A and 1B, by making the length of the first antenna 3 carrying the IC chip 7 shorter than the length of the second antenna 5, the positioning accuracy of the relative position of the first antenna 3 and the second antenna 5 is relaxed.
In other words, since the length of the second antenna 5 is made longer than the length of the first antenna 3, even if some displacement arises in the relative position between the first antenna 3 and the second antenna 5, the RFID tag 1 can secure a relatively long communication distance for the second antenna 5.

The resonant frequency of an aerial wire circuit of the first antenna 3 and the second antenna 5 is almost determined by the length of the longer second antenna 5 and is not much affected by the length of the shorter first antenna 3. To be more precise, the higher is the relative permittivity of the resin container 12 to which the second antenna 5 is attached, the larger becomes the effect of wavelength reduction rate and the shorter can become the second antenna 5 which is for causing a resonance at a predetermined frequency.

Moreover, by making the length of the IC-chip-mounted first antenna 3 shorter than the length of the second antenna 5, the positioning accuracy of the relative position of the first antenna 3 and the second antenna 5 is made less strict. In other words, by making the length of the second antenna 5 shorter than the first antenna 3, even if some displacement occurs between the first antenna 3 and the second antenna 5, the first antenna 3 and the second antenna 5 resonate appropriately, and transmission/ reception gains of the second antenna 5 can be maintained so that a relatively long communication distance can be obtained.

At this time, when the frequency of the wave used is set to 2.45 GHz, even if the length of the first antenna 3 is about 15 mm, a communication distance of about 300 mm can be obtained. Therefore, even if the first antenna 3 is a miniaturized or shortened antenna, an electromagnetic field generated by the first antenna 3 can sufficiently reach the second antenna 5, so that the first antenna 3 and the second antenna 5 may electromagnetically tightly coupled, thereby radiating a strong electric wave or a strong electromagnetic field from the second antenna 5 to the outside and a predetermined communication distance can be obtained.

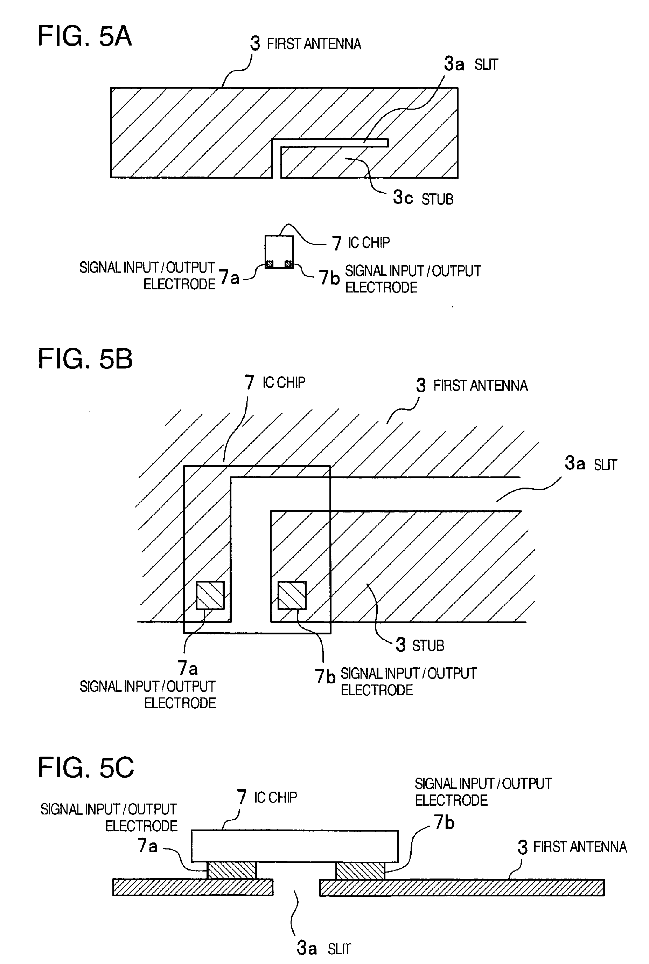

Note that the RFID tag 1 is a passive type that takes out energy from external electromagnetic waves to operate and the IC chip 7 has a capacitor of relatively large capacitance (not shown) in its power supply circuit (not shown), for example, and therefore the input/output terminals are capacitive. However, a slit 3a is formed in the first antenna 3 and therefore an impedance-matching stub 3c (refer to Fig. 5) is formed, which will be described later, and hence the power feeding point becomes inductive, with the result that even if the first antenna 3 is a miniaturized antenna, a predetermined communication distance can be obtained.

In the RFID tag 1 shown in Figs. 1A and 1B, the first antenna 3 of good conductive material, such as aluminum or copper foil, is formed on a base film, such as PET, PEN or polyimide (not shown), which is adjacent to the top surface of the first spacer 2 about 1 mm in thickness made of a resin foamable material, such as urethane. An impedance-matching slit 3a is formed in the vicinity of the center of the first antenna 3, and an IC chip 7 is mounted in a manner straddling or bridging over the slit 3a.

Furthermore, a second spacer 4 of a resin about 1 mm in thickness with a predetermined permittivity is formed on the top surface of the first antenna 3, and on top of the second spacer 4 is arranged a second antenna 5 of copper foil with a thickness of about several tens of µm to 0.1 mm. The second spacer 4 is preferably formed of a material with a relative permittivity close to 1, such as a foam material to reduce loss. Therefore, the thickness of the RFID tag 1 laminated as shown in Fig. 1B becomes to about a little less than 2 mm, which includes an adhesive to glue those component elements together. As a result, the RFID tag 1 formed as described can be attached at the underside of the first spacer 2 to the top surface of a tag mounting member 6, such as the metal case 11 (refer to Figs. 3A and 3B).

However, as shown in Figs. 3A and 3B, in the case of a portable electronic device 10, such as a cell phone or a digital video camera, since the clearance is 2 mm or less between the metal case 11 containing electronic circuits and the resin container 12 that houses the metal case 11, it is fairly difficult to place the RFID tag 1a with a thickness of a little less than 2 mm into the clearance between the metal case 11 and the resin container 12.

Therefore, as shown in Fig. 2, the RFID tag 1a according to a modification of the first embodiment is separated into the component elements of the first antenna 3 and the components of the second antenna 5.

Fig. 2 is a block diagram of the RFID tag 1a according to this embodiment in which the component elements of the first antenna 3 are separated from the component elements of the second antenna 5.

As shown in Fig. 2, this RFID tag 1a is arranged such that the first antenna 3 is attached or glued through the intermediary of the first spacer 2 to the top surface of a tag mounting member 6, such as the metal case 11 (refer to Figs. 3A and 3B). Then, the second spacer 4 for the second antenna 5 is arranged at a position slightly spaced away from the first antenna 3 (about 1 mm away, for example) with its longitudinal direction being parallel with the first antenna 3, then the second antenna 5 is attached to the top surface of the second spacer 4.

Figs. 3A and 3B are cross-sectional plan views seen from above, of an electronic device 10 to which the RFID tag 1a according to a modification of the first embodiment is applied. Fig. 3A shows the state in which the RFID tag 1a is not mounted and Fig. 3B shows the state in which the RFID tag 1a is mounted. To realize an RFID tag 1a as shown in Fig. 2, a part of the resin container 12 that packages or houses the metal case 11 of the electronic device 10 is used as the second spacer 4.

The electronic device shown in Fig. 3A is in a structure that packages or houses the metal case 11 containing electronic circuits (not shown) in a resin container 12. At this time, the clearance between the top surface of the metal case 11 and the inner surface of the resin container is about 2 mm, for example. Therefore, a laminated structure formed by attaching the first spacer 2 with a thickness of about 0.4 mm and the first antenna 3 with a thickness of about several tens of µm to a metal-made tag mounting member 6 as shown in Fig. 2 can be realized by attaching the first spacer 2 and the first antenna 3 to the metal case 11 as shown in Fig. 3B. In other words, the first spacer 2 and the first antenna 3 can be easily accommodated in a narrow clearance of about 2 mm between the outer surface of the metal case 11 and the inner surface of the resin container 12.

Moreover, the structure formed by arranging the second spacer 4 and the second antenna 5 at a position slightly spaced from the components of the first spacer 2 and the first antenna 3 as shown in Fig. 1B can be realized by attaching the second antenna 5 to the outer surface of the resin container 12 at a position thereof facing the first antenna 3 as shown in Fig. 3B. In other words, the resin container 12 shown in Fig. 3B corresponds to the second spacer 4 shown in Fig. 1B. With the arrangement of the RFID tag 1a as described, just the component elements of the first spacer 2 and the first antenna 3 have only to be accommodated in a clearance of about 2 mm between the metal case 11 and the resin container 12, so that even when the clearance is narrower, the RFID tag 1a can be realized.

In other words, as shown in Fig. 3A, the electronic device 10 is structured such that the metal case 11 is packaged or housed in the resin container 12 with interposition of a small clearance. When an RFID tag 1a is to be realized in such a miniaturized electronic device 10, as shown in Fig. 3B, the tag 1a is structured such that the first antenna 3 is mounted to the surface of the metal case 11 through the intermediary of the first spacer 2 and the second antenna 5 is mounted to the surface of the resin container 12 at a position thereof facing the first antenna 3. In this case, the resin container 12 performs the function of the second spacer 4. With the structure, just the component elements of the first spacer 2 and the first antenna 3 have only to be accommodated in a narrow clearance between the metal case 11 and the resin container 12, and therefore even to a down-sized electronic device 10, the RFID tag 1a can be mounted. Furthermore, since the length of the first antenna 3 is made shorter than the length of the second antenna 5, even if some displacement occurs in the relative position of the first antenna 3 and the second antenna 5 owing to some displacement during a mounting or attaching operation, variations in the communication distance among individual RFID tags can be reduced.

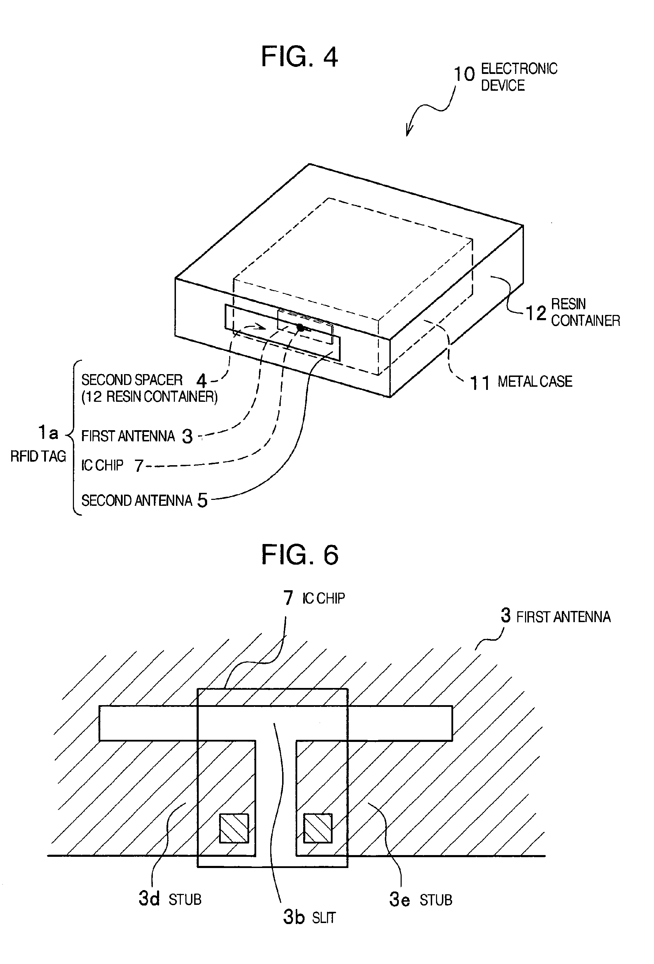

Fig. 4 is a perspective view of an electronic device 10 incorporating an RFID tag 1a according to a modification of the first embodiment of the present invention.

More specifically, by providing an RFID tag 1a which is formed by attaching a second antenna 5 to the outer surface of a resin container 12 that packages or houses an electronic device 10 and attaching a first antenna 3 through the intermediary of a first spacer 2 (not shown) to the outer surface of a metal case 11 located inside the resin container 12, the electronic device 10 can be managed by reading and writing information on the electronic device 10 through a tag reader (not shown) placed over the RFID tag 1a of the electronic device 10. Because the IC chip 7 is not provided on the outer-surface side of the metal case 11, chances that the IC chip 7 is changed by somebody against the will of the manager or the like are greatly reduced as will be described later.

The second antenna 5 may be structured to be attachable/ detachable to the resin container 12. With the arrangement, when the electronic device 10 is being used by the user, the second antenna 5 may be removed, and when the electronic device 10 is taken to the manufacturer's shop for repair or overhaul, the second antenna 5 may be attached to or temporarily placed on the resin container 12 of the electronic device 10 to read information via a tag reader (not shown) so that necessary actions can be taken. In this way, by forming the second antenna 5 in an attachable/detachable structure, chances of the second antenna 5 coming off when the user is using it, are eliminated; therefore, the usability of the electronic device is fairly improved. In addition, information in the RFID tag 1a is prevented from being read by a third person. In this case, preferably, a marker may be provided on the resin container 12 to indicate a position where the second antenna 5 is to be attached or placed temporarily.

Preferably, a mark, a serial number, type or bar code may be printed on the surface of the second antenna 5 so that, when the second antenna 5 is removed from the electronic device 10 and is to be attached back to the electronic device 10, a correspondence relation between them can be known easily from the serial number or the like. Further, the second antenna 5 may coated on its surface with a protective film, such as polyethylene terephthalate (PET), polypropylene (PP), or polyvinyl chloride (PVC), there will be no possibility that the printed characters such as a mark, serial number, type or bar code fades away, and the second antenna 5 is prevented from being damaged from repeated attaching and detaching actions. Instead of printing on the surface of the second antenna 5, the mark, serial number, type or bar code may be printed on the outer surface of the protective coating over the second antenna 5.

As is clear from Fig. 4, the first antenna 3 on which the IC chip 7 is mounted is made shorter than the length of the second antenna 5. Further, as described above, the slit 3a is formed in the first antenna 3 to form the impedance-matching stub 3c (refer to Figs. 5A to 5C). Therefore, even if the length of the first antenna 3 is about 0.2λ to 0.4λ (where λ is the wavelength of the electric wave used), the radiated electric wave or electromagnetic field of the first antenna 3 can reach the second antenna 5 at high intensity. For example, when the frequency of the wave is 2.45 GHz, even if the length of the first antenna 3 is about 20 to 30 mm, a desired high-intensity electric wave or electromagnetic field can be radiated to the second antenna 5. Therefore, the second antenna 5 resonates according its length, and can radiate or receive the wave. Note that the length of the second antenna 5 is determined by the frequency of the wave used and the permittivity of the second spacer 4.

Referring to Figs. 5A to 5C, description will be made of a specific example, in which the slit 3a for impedance matching is provided in the first antenna 3 on which the IC chip 7 is mounted.

Figs. 5A to 5C are process charts showing steps by which an IC chip 7 is mounted to a power feeding part of the first antenna 3, in which Fig. 5A shows a power feeding part by the first antenna 3 and the IC chip, Fig. 5B is an enlarged view of the power feeding part when an IC chip 7 is mounted on the first antenna 3, and Fig. 5C is a sectional view of the joining region (joint portion) of the first antenna 3 and the IC chip 7.

As shown in Fig. 5A, in the power feeding part at the center portion of the first antenna 3, there is formed a slit 3a in an L-form for impedance matching between the IC chip 7 and the first antenna 3, and a portion of the first antenna 3 which is defined or surrounded by the slit 3a is a stub 3c. On the IC chip 7, a signal input/output electrode 7a and a signal input/output electrode 7b are formed at two opposite positions across a distance straddling the slit 3a.

Because the width of the slit 3a is a little narrower than the space between the signal input/output electrodes 7a and 7b on the IC chip 7, when IC chip 7 is mounted on the first antenna 3 as shown in Fig. 5B, the signal input/output electrodes 7a and 7b of the IC chip 7 are connected to the first antenna 3 in a manner straddling the slit 3a. Since the stub 3c thus formed as a result of the formation of the slit 3a, is connected in series between the first antenna 3 and the IC chip 7, the stub 3c acts as an inductance component between the first antenna 3 and the IC chip 7. Therefore, the capacitance component in the IC chip 7 is canceled by the inductance component, so that impedances are matched between the first antenna 3 and the IC chip 7. Note that as shown in Fig. 5C, the signal input/output electrodes 7a and 7b of the IC chip 7 are electrically connected to the first antenna 3 through gold bumps by ultrasonic bonding or metal eutectic bonding.

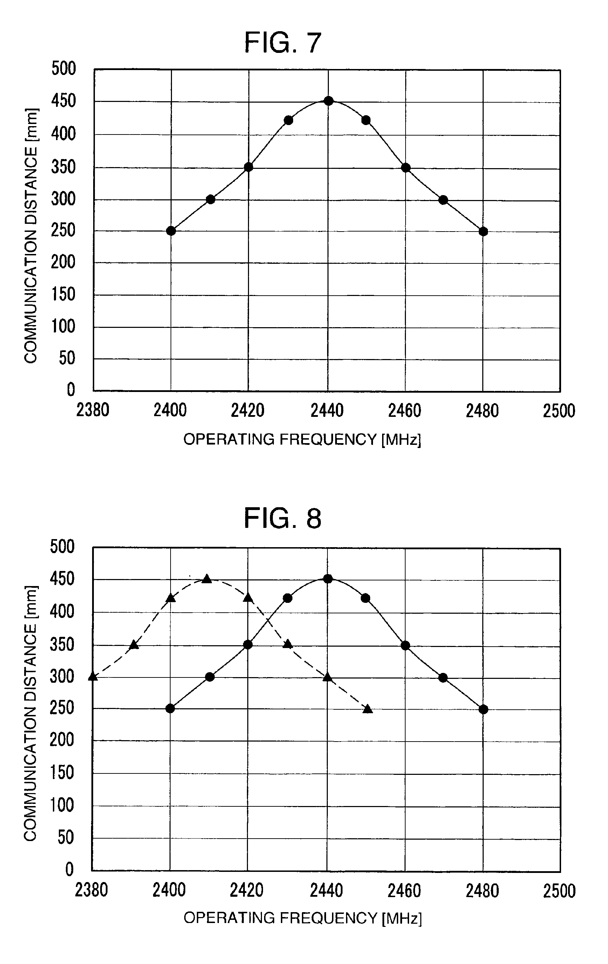

Fig. 6 is a conceptual diagram of the first antenna 3, in which an IC chip 7 is mounted to a power feeding part of the T-slit 3b. Instead of forming a L-slot 3a in the first antenna 3, the slit 3b of a T shape may be formed. As shown in Fig. 6, by forming the slit 3b of the first antenna 3 in the T shape and connecting stubs 3d and 3e in series between IC chip 7 and the first antenna 3, the impedances of the first antenna 3 and the IC chip 7 can be matched as in the L-slit 3a.

Description will now be made by going back to the RFID tag 1 shown in Fig. 1. Instead of making the first antenna 3 and the second antenna 5 of the same length, advantage of making the second antenna 5 longer than the first antenna 3 will be described based on characteristics graphs.

Fig. 7 is a characteristic graph showing a relation between operating frequency and communication distance of the RFID tag 1 of a basic structure as shown in Figs. 1A and 1B, in which the horizontal axis denotes operating frequency [MHz], and the vertical axis denotes communication distance [mm]. This characteristic graph shows a relation between operating frequency and communication distance when the design center frequency is 2440 MHz (2.44 GHz). As shown in Fig. 7, a maximum communication distance of 450 mm can be obtained when the design frequency is 2440 MHz, and as the frequency deviated from the center frequency, the communication distance became shorter, and when the operating frequency is 2410 MHz, 30 MHz lower than the center frequency, the communication distance decreased to about 300 mm. Therefore, it can be known that if a communication frequency used is set in advance and an RFID tag 1 with an antenna length matched to this communication frequency is used, a maximum communication distance can be obtained.

Fig. 8 is a characteristic graph showing the changes when the center frequency is changed if the first antenna 3 and the second antenna 5 are of the same length in the RFID tag 1 of the basic structure as shown in Figs. 1A and 1B. The horizontal axis denotes operating frequency [MHz] and the vertical axis denotes communication distance [mm]. Fig. 8 shows a case where the center frequency (hereafter referred to as the operating center frequency) of operating frequencies is set to 2440 MHz and changed to 2410 MHz. In other words, the communication distance is 450 mm when the operating center frequency is 2440 MHz, but if the center frequency decreases by 30 MHz, the communication distance decreases from 450 mm to 300 mm. In other words, when the operating center frequency decreases for 30 MHz, the communication distance becomes 33% shorter.

This indicates that, while it has been known that when the first antenna 3 and the second antenna 5 are of the same length, if the relative position changes between the first antenna 3 and the second antenna 5, the operating center frequency of the RFID tag 1 changes greatly, the communication distance decreases almost in proportion to the magnitude of a shift of the operating center frequency, as will be described later. Therefore, it has been necessary to obtain a high positioning accuracy of the relative position between the first antenna 3 and the second antenna 5 in order to reduce a displacement between them in the production process when the first antenna 3 and the second antenna 5 are of the same length. Especially, it has been necessary to be very careful in positioning when the second antenna 5 is attached or set temporarily on the resin container as occasion demands.

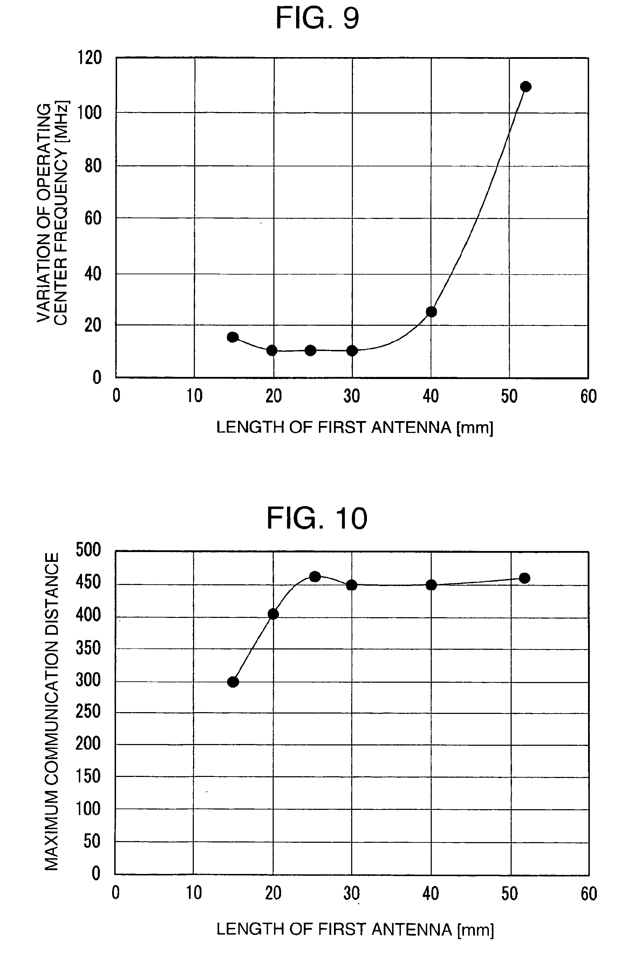

Fig. 9 is a characteristic graph showing variation in the operation center frequency relative to the length of the first antenna 3 when the amount of displacement between the first antenna 3 and the second antenna 5 is ±5 mm. The horizontal axis denotes the length [mm] of the first antenna 3 and the vertical axis denotes variation Δf [MHz] of the operating center frequency.

The displacement between the first antenna 3 and the second antenna 5 leads to a change in the operating center frequency, but the variation Δf [MHz] in the operating center frequency depends on the length of the first antenna 3 as shown in Fig. 9. In other words, when the length of the first antenna 3 is made shorter than the length of the second antenna 5, the variation Δf of the operating center frequency becomes small in relation to the displacement of the relative position between the first antenna 3 and the second antenna 5. In an example shown in Fig. 9, when the length of the first antenna 3 is 0.2λ to 0.3λ (in other words, 20 mm - 30 mm at a used frequency of 2.45GHz), the variation Δf of the operating center frequency becomes a minimum at about 10MHz), and when the length of the first antenna 3 is 0.4λ [40 mm], the variation Δf is about 25MHz.

Fig. 10 is a characteristic graph showing a relation between the length of the first antenna 3 and a maximum communication distance when the frequency used is 2.45 GHz. The horizontal axis denotes the length [mm] of the first antenna 3 and the vertical axis denotes a maximum communication distance [mm]. As shown in Fig. 10, if the length of the first antenna 3 is made shorter than 25 mm [0.25λ], a communication distance decreases, but if the length of the first antenna 3 is made longer than 25 mm [0.25λ], a communication distance can be stably kept at about 450 mm.

On the basis of characteristics data described above, by providing the first antenna 3 preferably with a length of about 0.2λ - 0.4λ (20 mm - 40 mm) or more preferably with a length of about 0.2λ - 0.3λ and making the second antenna 5 longer than the first antenna 3, it is possible to limit to a low level a variation of an operating center frequency even if a displacement occurs in the relative position between first antenna 3 and the second antenna 5, and accordingly a communication distance of the RFID tag 1 can be prevented from being decreased.

### <Second Embodiment>

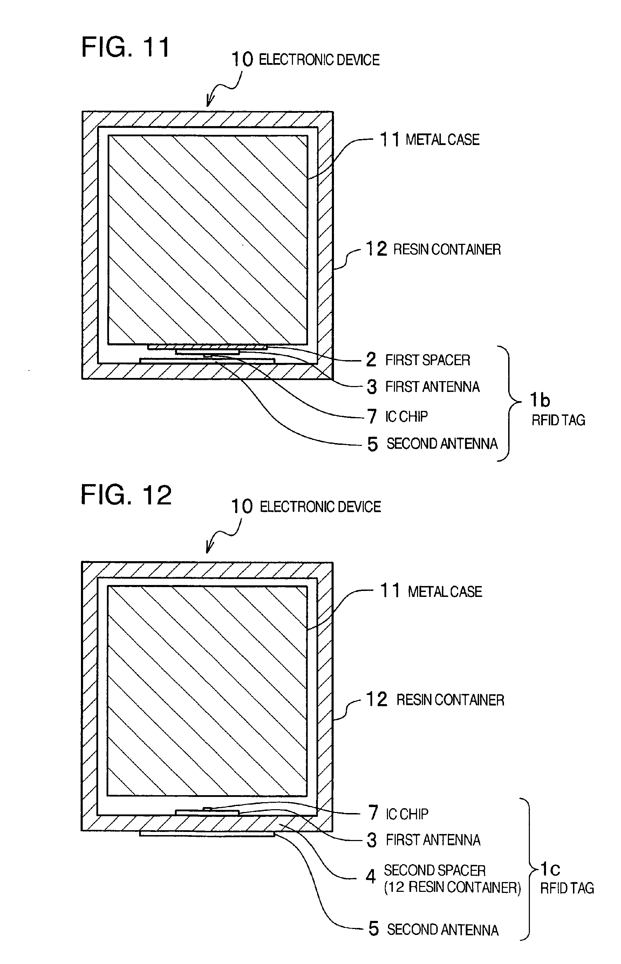

Fig. 11 is a transparent plan view of an electronic device 10 including an RFID tag 1b according to a second embodiment of the present invention.

An RFID tag 1b according to the second embodiment can be mounted appropriately when the clearance between the metal case 11 and the resin container 12 in an electronic device 10 is a little wider. In other words, the first spacer 2 and the first antenna 3 are attached to the outer surface of the metal case 11 with an adhesive, and furthermore the second antenna 5 is attached to the inner surface of the resin container 12 at a position thereof facing the first antenna 3. In this case, the space between the first antenna 3 and the second antenna 5 serves as the second spacer 4. In other words, the air with a relative permittivity of 1 acts as the second spacer 4, but since the communication distance of the first antenna 3 is enough for waves to reach the second antenna 5, high-intensity electric waves can be radiated from the second antenna 5 to the outside.

### <Third Embodiment>

Fig. 12 is a transparent plan view of an electronic device 10 including an RFID tag 1c according to a third embodiment of the present invention.

In the RFID tag 1c according to the third embodiment, the first antenna 3 is attached directly to the inner surface of the resin container 12 without any intermediary, such as the first spacer 2 (refer to Fig. 3). And, the second antenna 5 is attached to the outer surface of the resin container 12 at a position thereof facing the first antenna 3.

According to the RFID tag 1c of the third embodiment, the RFID tag 1c can be mounted even when the clearance between the metal case 11 and the resin container 12 is narrow.

### <Summary>

As has been described, an RFID tag according to the present invention includes a first antenna 3 on which an IC chip is mounted and a second antenna 5 that resonates at a prescribed frequency with the first antenna 3, and the first antenna 3 and the second antenna 5 are structured so as to be separated from each other, and the resin container 12 as a packaging case for the electronic device 10 is used as a spacer (the second spacer 4) between the first antenna 3 and the second antenna 5. More specifically, the first antenna 3 is mounted through the intermediary of the first spacer 2 to the metal case 11, and the second antenna 5 is mounted to the outer surface of the resin container 12 (refer to Fig. 3B). With the structure, the RFID tag 1b can be mounted even if the clearance between the metal case 11 and the resin container 12 in the electronic device 10 is narrow. It ought to be noted that the second antenna 5 mounted on the outer surface of the resin container 12 may be so structured as to be attachable/detachable from the resin container 12, and if the second antenna 5 is attached or detached as occasion demands, the usability of the electronic device 10 can be further improved. In a case where there is a sufficient clearance between the metal case 11 and the resin container 12, the second antenna 5 may be accommodated inside the resin container 12. If a resin cover is provided on a battery, such as a lithium ion battery of a cell phone (none of these parts shown), the first spacer 2 can be omitted, and the first antenna 3 can be mounted to the surface of the battery. Thus, the RFID tag can be formed in a thinner structure.

In an RFID tag structured as described, the first antenna 3 and the second antenna 5 are parallel in the longitudinal direction, and the length of the first antenna 3 is shorter than the length of the second antenna 5. In other words, since a slit 3a for impedance matching is formed in the first antenna 3, even if the first antenna 3 has a length of, preferably, about 0.2λ - 0.4λ or more preferably about 0.2λ - 0.3 λ, the first antenna 3 can radiate high-intensity electric waves to the second antenna 5.

If the underside of the second antenna 5 is smeared or coated with an adhesive material in advance, the second antenna 5 can be easily attached to the resin container 12. In addition, if a mark, serial number, type or bar code is printed on the outer surface of the second antenna 5 and this surface is coated with a protective film, such as PET, PP or PVC, there is no possibility that printed characters are worn out, so that the management of correspondence relation between RFID tags and electronic devices 10 can be carried out securely.

According to an RFID tag of the present invention, in case the internal unit of the electronic device is replaceable, if only the first antenna 3 is installed in the internal unit and the internal unit is set in the resin container 12 as the outer packaging, by attaching the second antenna 5 to the outer surface of the resin container 12, information, such as ID, can be read by placing a tag reader over the second antenna 5. Even when the internal unit is not replaceable, if only the first antenna 3 is installed in the internal unit in advance and the internal unit is set in the resin container 12, only by attaching the second antenna 5 to the outer surface of the resin container 12, information, such as ID, can be read by a tag reader. Furthermore, because the first antenna 3 on which the IC chip 7 is mounted is contained in the resin container, the first antenna 3 with the IC chip 7 as a secret device is prevented from being dismantled or replaced or destroyed by a third person.

According to an RFID tag of the present invention, because the resin container 12 packaging the electronic device can be used as a spacer (dielectric material) between the first antenna 3 and the second antenna 5, a new spacer is not required, so that the resin container 12 can be further reduced in thickness. By using the clearance (air) between the metal case 11 and the resin container 12 in an electronic device 10 as a spacer between the first antenna 3 and the second antenna 5, the size of the resin container 12 can be made smaller, and the electronic device 10 can be miniaturized.

According to an RFID tag of the present invention, the RFID tag can perform its communication function only when the second antenna 5 is mounted to the resin container 12; therefore, unauthorized reading of the RFID tag by a third person can be prevented. More specifically, by making an arrangement that the manager of the electronic device attaches or detaches the second antenna 5 to or from the resin container 12, the privacy protection function can be realized. For example, if it is allowed to mount the second antenna 5 to the resin container 12 and read information from the electronic device 10 only when the electronic device is to be checked and repaired, it become possible for the manager to carry out thorough information management. In addition, by removing the second antenna 5, RFID-tag information is prevented from being read by unspecified third persons.

According to an RFID tag of the present invention, by making the length of the second antenna 5 longer than the first antenna 3, required accuracy of the relative position between the first antenna 3 and the second antenna 5 can be made less stringent. Even when the clearance between the metal case 11 and the resin container 12 is small, only by mounting the first spacer 2 and the first antenna 3 to the metal case 11, an RFID tag can be realized. Because the second antenna 5 can be attached or detached freely to or from the surface of the resin container 12, protrusions extending to the outside from the electronic device 10 can be decreased.

Since the RFID tags according to the present invention can be mounted in narrow clearances, the RFID tags can contribute to down-sizing of portable electronic devices, such as cell phone, digital video cameras, and removal hard disk drives, and can be used effectively for management of information in those devices.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An RFID tag usable by being mounted on a conductor, comprising:
a first antenna (3) disposed on said conductor (6), said first antenna (3) having an IC chip (7) mounted thereon;
a second antenna (5) disposed so as to be electromagnetically coupled to said first antenna (3) and resonate at a predetermined communication frequency;
a first spacer (2) holding said first antenna (3) away from said conductor (6); and
a second spacer (4) holding said second antenna (5) away from said first antenna (3),
wherein the length of said first antenna (3) is shorter than the length of said second antenna (5).

2. An RFID tag usable by being mounted on an electronic device having a conductor-made case (11) and a non-conductor-made container (12) for packaging said case (11), comprising:
a first antenna (3) disposed on said case (11), said first antenna (3) having an IC chip (7) mounted thereon;
a second antenna (5) disposed so as to be electromagnetically coupled to said first antenna (3) and resonate at a predetermined communication frequency;
a first spacer holding said first antenna (3) while separating said first antenna (3) from said conductor (6); and
a second spacer holding said second antenna (5) while separating said second spacer from said first antenna (3),
wherein said container (12) is used as said second spacer, and wherein the length of said first antenna (3) is shorter than the length of said second antenna (5).

3. The RFID tag according to claim 1 or 2, wherein said first antenna (3) and said second antenna (5) are parallel in the longitudinal direction.

4. The RFID tag according to claim 1 or 2, wherein the length of said first antenna (3) is not less than 0.2 and not more than 0.4, preferably 0.3, of a wavelength of an electromagnetic wave of said communication frequency.

5. The RFID tag according to claim 2, wherein said second antenna (5) is mounted to an inner surface of said container (12) or an outer surface of said container (12).

6. The RFID tag according to claim 5, wherein an adhesive is applied to one surface of said second antenna (5).

7. The RFID tag according to claim 5, wherein said second antenna (5) is mounted in an attachable and detachable manner.

8. The RFID tag according to claim 2, wherein a character or a symbol is printed on a surface of said second antenna (5) to show correspondence with said electronic device.

9. The RFID tag according to claim 8, wherein said character or symbol includes one of a mark, a serial number, a type or a bar code showing correspondence with said electronic device.

10. The RFID tag according to claim 2, further comprising a protective film formed on the surface of said second antenna (5).

11. The RFID tag according to claim 2, wherein a protective film is formed on the surface of said second antenna (5) and at least one of a mark, a serial number, a type and a bar code showing correspondence with said electronic device is printed on the surface of said protective film.

12. The RFID tag according to claim 11, wherein said container (12) has written on a surface thereof a position where said second antenna (5) is mounted.

13. A method for reading an RFID tag (1) usable by being mounted on an electronic device having a conductor-made case (11) and a dielectric-made container (12) for packaging said case (11), said RFID tag (1) comprising a first antenna (3) disposed on said case (11), said first antenna (3) having an IC chip (7) mounted thereon; a second antenna (5) disposed so as to be electromagnetically coupled to said first antenna (3) and resonate at a predetermined communication frequency; a first spacer (2) holding said first antenna (3) away from said conductor (6); and a second spacer (4) holding said second antenna (5) away from said first antenna (3),
wherein said container (12) is used as said second spacer;
wherein the length of said first antenna (3) is shorter than the length of said second antenna (5); and
wherein when said RFID tag (1) is to be read, said second antenna (5) is mounted and for other than when said RFID tag (1) is to be read, said second antenna (5) is removed.

14. The method for reading the RFID tag (1) according to claim 13, wherein said second antenna (5) is mounted on the inner surface of said container (12).

15. The method for reading the RFID tag (1) according to claim 13, wherein said second antenna (5) is mounted on the outer surface of said container (12).

16. The method for reading the RFID tag (1) according to claim 13, wherein a protective film is formed on the surface of said second antenna (5), and at least one of a mark, a serial number, type, and bar code to show correspondence with the electronic device is printed on the surface of said protective film.
